# EUROPEAN PATENT APPLICATION

(11) **EP 3 575 653 A1**
(43) Date of publication of application: **04.12.2019**
(21) Application number: 18175501.8
(22) Date of filing: 01.06.2018
(51) Int. Cl.: F16K 37/00, F16K 17/04, H01F 27/14, H01F 27/40

(54) **A PRESSURE RELIEF DEVICE FOR POWER TRANSFORMERS**

(71) Applicant: ABB Schweiz AG, 5400 Baden (CH)
(72) Inventor: Medea, Francesco, I-35040 Sant'Elena (PD) (IT); Manco, Giuseppe Leonardo, I-87029 Scalea (CS) (IT); Giannone, Riccardo, I-36077 Altavilla Vicentina (VI) (IT)
(74) Representative: De Bortoli, Eros

(57) **Abstract**

A pressure relief device (1) for a power transformer (100) provided with a tank (101) filled with an insulating liquid, said pressure relief device comprising:
- a support flange (2) operatively coupleable with said tank (101) and comprising a through port (22) coupleable with an opening (104) of said tank;
- a valve element (3) displaceable between a closed position (A), at which it obstructs said through port, and an open position (B), at which it is spaced away from said support flange;
- a protection cover (4) fixed with said support flange and spaced apart from said support flange and said valve element;
- first elastic means (10) adapted to urge said valve element (3) in said closed position (A) and contrast a movement of said valve element from said closed position (A) to said open position (B);
- at least a switch device (6) adapted to signal a movement of said valve element from said closed position (A) to said open position (B).

Said at least a switch device (6) comprises a switch pin (61) reversibly movable between a compressed position (E) and a released position (F). A movement of said switch pin (61) from said compressed position (E) to said released position (F) is responsive to a movement of said valve element from said closed position (A) to said open position (B).

## Description

The present invention relates to a pressure relief device for power transformers.

Power transformers are widely known in the field of electric power distribution and transmission installations.

Typically, power transformers comprise a magnetic core having a number of windings, i.e. low-voltage windings, high-voltage windings, control or regulation windings.

Due to the intrinsic structural characteristics and functioning of these apparatuses, important aspects concern cooling and electric insulation, which must be guaranteed for components in order to provide the desired electromagnetic performance without incurring in malfunctioning or damages.

To this end, power transformers normally comprise a tank or vessel filled with an insulating liquid, e.g. a mineral oil, used as a coolant for the components of the transformer.

However, during the operating life, specific physical quantities (e.g. volume, pressure, and the like) of the insulating liquid may vary (e.g. due to temperature fluctuations, gas accumulation within the tank, and the like) and lead to dangerous operating conditions.

For this reason, power transformers are typically equipped with a pressure relief device designed to allow the insulating liquid to exit from the tank, when the pressure of said insulating liquid is too high. In this way, overpressure phenomena inside the tank are discharged outside, into the surrounding environment.

Known pressure relief devices are usually connected to a wall of the transformer tank and are available in numerous and various constructive solutions.

A pressure relief device of known type is disclosed in US3914528. In this patent document, the pressure relief device comprises a displaceable valve element to allow the insulating liquid to exit from the tank when overpressure phenomena are present. The valve element is operatively coupled to an actuation pin that is vertically moved when the valve element is displaced by the insulating liquid spilling from the tank. The actuation pin is operatively associated with a mechanical-magnetic switch device (namely of the reed type) activatable by a movement of the actuation pin in response to a movement of said valve element. When activated by the actuation pin, the switch device provides a control signal or an alarm signal that is thus indicative of the spillage of insulating liquid from the tank.

Although pressure relief devices of the state of the art perform their functions in a satisfying way, there are some aspects to improve, in particular with regards of the activation mechanism of the enclosed switch devices in response to a movement of the valve element.

Currently adopted solutions of the state of the art are often unreliable and slowly responsive to the movement of the valve element.

The present invention intends to respond to this need by providing a pressure relief device for power transformers, according to claim 1 and the related dependent claims.

In a general definition, the pressure relief device, according to the invention, comprises:
- a support flange operatively coupleable with the tank of the transformer and comprising a through port coupleable with an opening of said tank;
- a valve element displaceable between a closed position, at which it obstructs said through port, and an open position, at which it is spaced away from said support flange;
- a protection cover fixed with said support flange and spaced apart from said support flange and said valve element;
- first elastic means adapted to urge said valve element in said closed position and contrast a movement of said valve element from said closed position to said open position;
- at least a switch device adapted to signal a movement of said valve element from said closed position to said open position.

According to the invention, said at least a switch device comprises a switch pin reversibly movable between a compressed position and a released position and operatively coupled with an actuation component of said pressure relief device in such a way that a movement of said switch pin from said compressed position to said released position is responsive to a movement of said valve element from said closed position to said open position.

Preferably, said at least a switch device comprises a contact arrangement operatively coupled with said switch pin and adapted to provide an output electric signal (e.g. a control signal or an alarm signal) in response to a movement (e.g. from said compressed position to said released position or vice-versa) of said switch pin.

Preferably, said at least a switch device comprises a main case and second elastic means operatively coupled with said switch pin and said main case. Said second elastic means are in a compressed state when said switch pin is in said compressed position and are in a rest state when said switch pin is in said released position.

According to preferred embodiments of the invention, the pressure relief device comprises an actuation pin having a first end operatively coupleable with the valve element and a second end opposite to said first end. Such an actuation pin is arranged to pass through an opening of the protection cover and protrude from an external surface of said protection cover. Said actuation pin is reversibly movable between a lowered position and a raised position. A movement of said actuation pin from said lowered position to said raised position is responsive to a movement of said valve element from said closed position to said open position.

According to these embodiments of the invention, the switch pin of said at least a switch device is operatively coupled with said actuation pin in such a way that a movement of said switch pin from said compressed position to said released position is responsive to a movement of said actuation pin from said lowered position to said raised position.

Preferably, when said actuation pin is in said lowered position, said switch pin is operatively coupled with a first portion of said actuation pin, which is adapted to urge said switch pin in said compressed position.

According to some constructive variants, the first portion of said actuation pin comprises a grooved coupling surface for coupling with said switch pin.

According to other constructive variants, the first portion of said actuation pin comprises a straight coupling surface for coupling with said switch pin.

Preferably, when said actuation pin is in said raised position, said switch pin is operatively coupled with a second portion of said actuation pin, which is adapted to allow said switch pin to take said released position.

Preferably, the second portion of said actuation pin comprises a first seat, in which said switch pin is at least partially inserted, when it is in said released position.

Preferably, said first seat is defined by one or more walls of the actuation pin, which are designed to favor the insertion of said switch pin in response to a movement of said actuation pin from said lowered position to said raised position.

Preferably, said actuation pin is arranged to pass through an opening of said protection cover and protrudes from an external surface of said protection cover. In this case, said at least a switch device is arranged on the external surface of said protection cover.

Preferably, said actuation pin is inserted through a bushing of said protection cover arranged at the opening of said protection cover.

Preferably, said actuation pin comprises a third portion, at which an O-ring element, operatively coupleable with said bushing, is arranged.

Preferably, said actuation pin comprises a fourth portion, at which an end-of-run element, operatively coupleable with said bushing, is arranged. Said end-of-run element is adapted to limit the movement of said actuation pin in response to a movement of said valve element from said closed position to said open position.

According to alternative embodiments of the invention, said valve element comprises an actuation portion. The switch pin of said at least a switch device is operatively coupled with said actuation portion in such a way that a movement of said switch pin from said compressed position to said released position is responsive to a movement of said valve element from said closed position to said open position.

Preferably, when said valve element is in said closed position, said actuation portion urges said switch pin in said compressed position.

Preferably, when said actuation pin is in said raised position, said actuation portion is separated from said switch pin to allow said switch pin to take said released position.

In a further aspect, the present invention relates to a power transformer, according to the following claim 14.

Further characteristics and advantages of the present invention will be more apparent with reference to the description given below and to the accompanying figures, provided purely for explanatory and non-limiting purposes, wherein:
- Fig. 1 schematically illustrates a partial section view of a power transformer including the pressure relief device, according to the present invention;
- Figs. 2-7 schematically illustrate the pressure relief device, according to an embodiment of the present invention, and some parts or components of said pressure relief device;
- Figs. 8-10 schematically illustrate the pressure relief device, according to a constructive variant of the embodiment shown in figures 2-7;
- Figs. 11-12 schematically illustrate the pressure relief device, according to another embodiment of the present invention.

With reference to the aforesaid figures, the pressure, according to the invention, will now be described in details. In the following detailed description of the invention, identical components or elements are generally indicated by same reference numerals, regardless of whether they are shown in different embodiments. In order to clearly and concisely disclose the invention, the drawings may not necessarily be to scale and certain features of the invention may be shown in a schematic form.

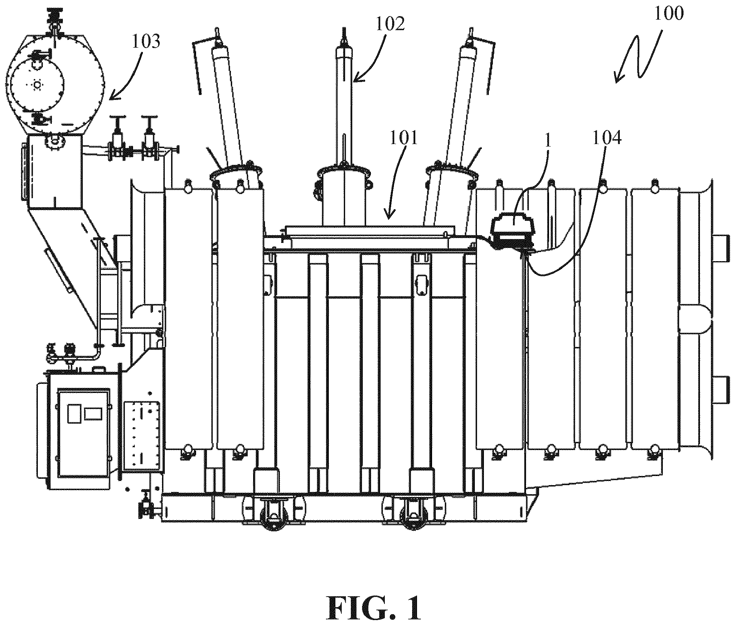

In figure 1, a power transformer 100 for electric power transmission and distribution installations (i.e. operating at voltages higher than 1 kV AC and 1,5 kV DC) is schematically shown.

The power transformer 100 comprises a tank 101 filled with a liquid having cooling and electrical insulation properties, e.g. mineral or vegetal oil (hereinafter referred to as "insulating liquid" for the sake of brevity).

Some components of the power transformer (e.g. the magnetic core and the related windings) are accommodated within the tank 101 and are at least partially immersed in the insulating liquid.

Other components of the power transformer 100, such as the electric bushes 102 and the conservator 103, are fixed on an external wall of the tank 101.

In general, the power transformer 100 may be of known type and it will not be here described in further details for the sake of brevity.

As shown in figure 1, the transformer 100 is equipped with a pressure relief device 1, according to the present invention.

The pressure relief device 1 is operatively installed on the tank 101 at a suitable compartment and it is operatively coupled with a drain opening 104, through which the insulating liquid contained in the tank may exit in emergency conditions, i.e. when overpressure phenomena within the tank 101 occur.

The pressure relief device 1 comprises a support flange 2 operatively coupleable with the tank 101 at the drain opening 104.

The support flange 2 comprises a through port 22 coupleable with the drain opening 104.

Preferably, the through port 22 extends along a longitudinal axis 15 and has a coupling end 221 coupleable with the drain opening 104 and a free end 222 opposite and in distal position with respect to the coupling end 221. The through port 22 can thus receive the insulating liquid at the coupling end 221 and convey said liquid to its free end 22, at which it can spill into the outer environment.

Preferably, the through port 22 has a circular section coaxial with the longitudinal axis 15. Preferably, the support flange 2 is provided a fixing collar 21 for mechanical connection with the tank 101.

Preferably, the support flange 2 is formed by a hollow body (conveniently of a metallic material).

The pressure relief device 1 comprises a valve element 3 displaceable in response to the exit of insulating liquid from the tank 101 and, consequently, from the through port 22 (at the free end 222 of this latter).

More particularly, the valve element 3 is movable between a closed position A and an open position B.

At the closed position A, the valve element 3 obstructs the through port 22 at the free end 222 of this latter and it prevents the inlet of dust or dirt in the tank 101 through the drain opening 104.

At the open position B, the valve element 3 is spaced away from the support flange 2 and it allows the insulating liquid exiting from the tank 101 (and conveyed to the free end 222 of the through port 22) to spill into the outer environment.

The separation movement (i.e. from the closed position A to the open position B) of the valve element 3 conveniently occurs as a result of the pressure exerted of the insulating liquid exiting from the tank 101.

The opposite return movement (i.e. from the open position B to the closed position A) of the valve element 3 occurs as a result of the force exerted by suitable elastic means 10, as it will be better illustrate in the following.

Preferably, the valve element 3 is coaxial with the through port 22 along the longitudinal axis 15.

Preferably, the valve element 3 is formed by a reverse-cup shaped body (conveniently of a metallic material), e.g. with a circular shape coaxial with the longitudinal axis 15.

The pressure relief device 1 comprises a protection cover 4 fixed with the support flange 2 and spaced apart from this latter and the valve element 3.

Conveniently, the protection cover 4 is arranged at the same side of the valve element 3 (with respect to the support flange 2), namely in proximal position with respect to the free end 222 of the through port 22.

The protection element 4 has thus an internal surface 41 facing the valve element 3 and the support flange 2 and an external surface 42 opposite to the internal surface 41 and facing the outer environment.

Preferably, the protection cover 4 is coaxial with the through port 22 and the valve element 3 along the longitudinal axis 15.

In order to fix the protection cover 4 to the support flange 2 and maintain the mutual spacing between these parts, the pressure relief device 1 comprises a plurality of connecting rods 11, preferably made of metallic material.

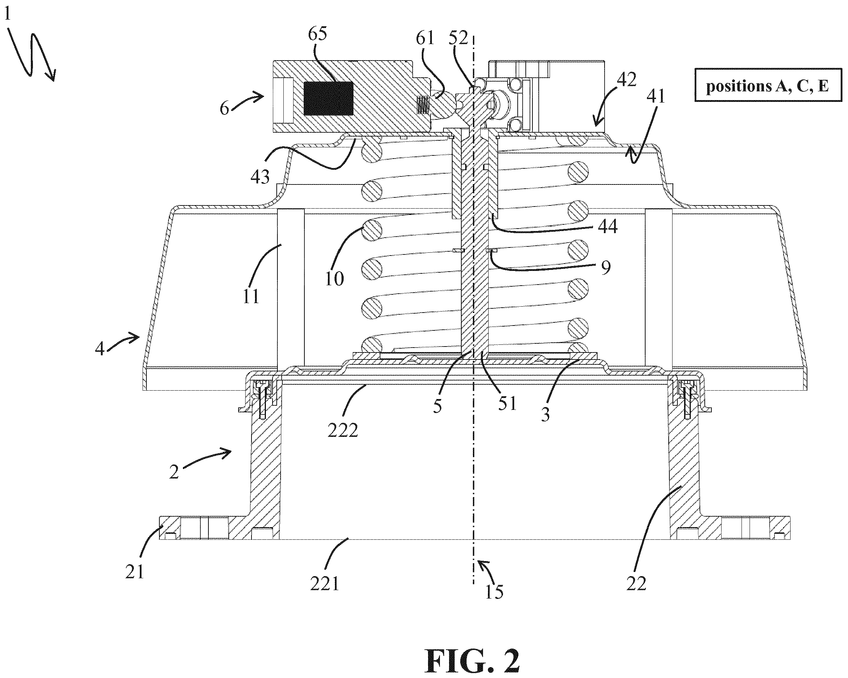

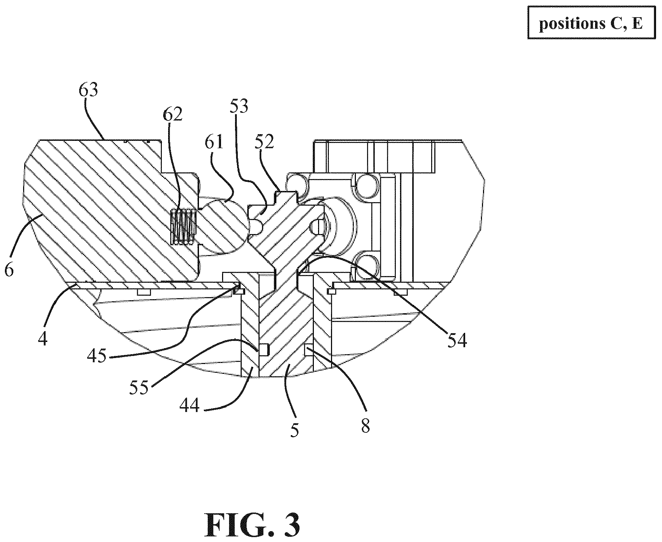

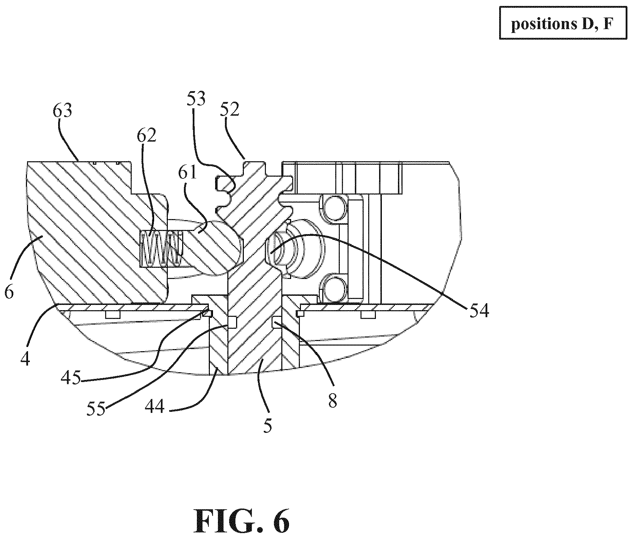

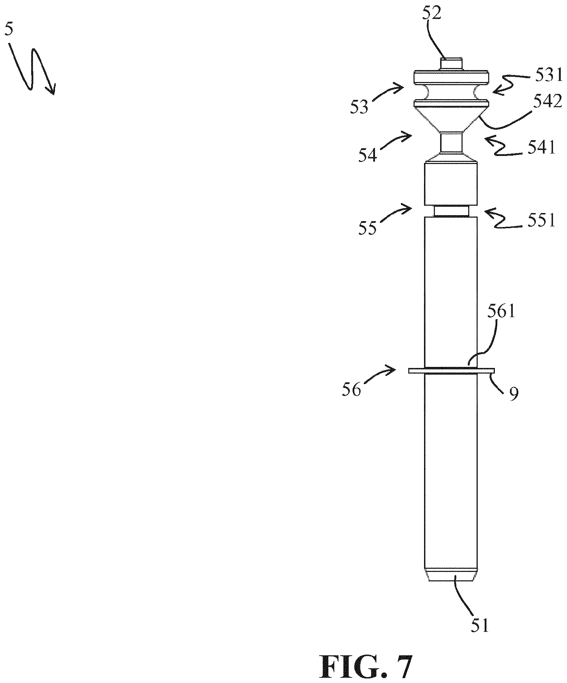

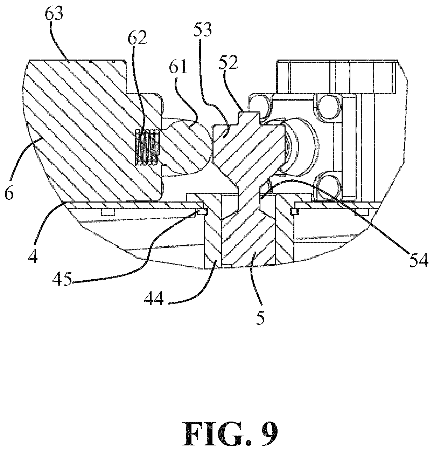

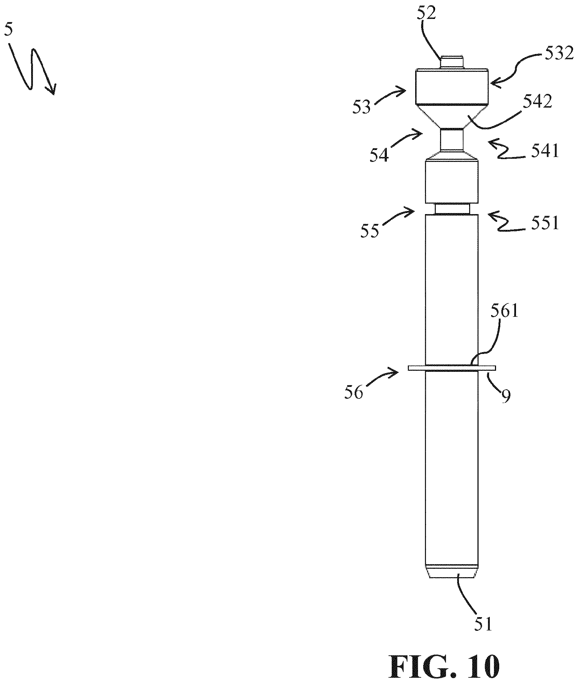

Conveniently, each connecting rod 11 has opposite ends fixed (in a known manner) to the support flange 2 (preferably to the fixing collar 21) and to the protection cover 4, respectively. According to some embodiments of the invention (figure 2-10), the protection cover 4 comprises a pass through opening 45 (conveniently coaxial with the longitudinal axis 15) for the passage of an actuation pin 5, as it will be better illustrate in the following.

In this case, the protection cover 4 preferably comprises a bushing 44 inserted through the opening 45 and extending, coaxially with the longitudinal axis 15, towards the valve element 3 to receive said actuation pin.

The pressure relief device 1 comprises first elastic means 10 arranged in such a way to urge the valve element 3 in the closed position A and contrast a separation movement of said valve element from the closed position A to the open position B.

The first elastic means 10 are thus adapted to suitably limit the movement of the valve element 3 during the spillage of the insulating liquid from the tank 101 and provide for returning the valve element 3 in the closed position A, once the spillage of said insulating liquid is over.

Preferably, the first elastic means 10 comprises one or more springs arranged coaxially with the valve element 3 and the protection cover 4 (at the internal surface 41 of this latter) along the longitudinal axis 15 between a coupling portion 43 of the protection cover 4 and the valve element 3 itself.

The pressure relief device comprises one or more switch devices 6 adapted to signal a separation movement of the valve element 3. In practice, the switch devices 6 are adapted to signal the spillage of insulating liquid from the tank 101 and, consequently, the occurrence of overpressure phenomena inside the tank 101.

In general, each switch device 6 is adapted to provide an output electric signal (e.g. an alarm signal or a control signal) in response to a change of its operating conditions. Conveniently, each switching device 6 is arranged so that such a change of its operating conditions is made dependent on a separation movement of the valve element 3 from the closed position A to the open position B.

According to the invention, each switch device 6 comprises a switch pin 61 (preferably of plastic or metallic material) reversibly movable between a compressed position E and a released position F.

Preferably, each switch device 6 comprises a contact arrangement 65 operatively coupled with the switch pin 61. The contact arrangement 65 is conveniently adapted to provide an output electric signal in response to a movement (preferably a translation movement) of the switch pin between the compressed position E and the released position F (according to a given direction).

Preferably, each switch device 6 comprises a main case 63 (preferably of plastic material) and second elastic means 62 operatively coupled with the switch pin 61 and the main case 63.

Preferably, when the switch pin 61 is in the compressed position E, the second elastic means 62 are in a compressed state and store an additional amount of elastic energy with respect to a given rest state.

Preferably, when the switch pin 61 is in the released position F, the second elastic means 62 are in a rest state, in which they store a residual amount of elastic energy (if they are precompressed) or are fully released.

Conveniently, the second elastic means 62 may include a spring having its opposite ends coupled with the switch pin 61 and a suitable seat of the main case 62.

In general, the switch devices 6 may be industrially realized according to known solutions of the state of the art and they will not be described in further details for the sake of brevity.

According to the invention, the switch devices 6 are arranged to interact with a corresponding actuation component 5, 31 of the pressure relief device 1, so that a movement of their switch pin 61 from the compressed position E to the released position F is responsive to a movement of the valve element 3 from said closed position A to the open position B.

In other words, the switch devices 6 are arranged to interact with a corresponding component of the pressure relief device 1, so that their switch pin 61 moves from the compressed position E to the released position F when the valve element 3 moves from said closed position A to the open position B.

According to preferred embodiments of the invention (illustrated in figures 2-10), the pressure relief device 1 comprises a shaped actuation pin 5 having opposite first and second ends 51, 52.

The actuation pin 5 is reversibly movable between a lowered position C and a raised position D, e.g. with respect to the protection cover 4.

Preferably, the actuation pin 5 is operatively coupleable with the valve element 3. Conveniently, the actuation pin 5 and the valve element 3 are mutually arranged in such a way that a raising movement of the actuation pin 5 from the lowered position C to the raised position D is responsive to a separation movement of the valve element 3 from the closed position A to the open position B.

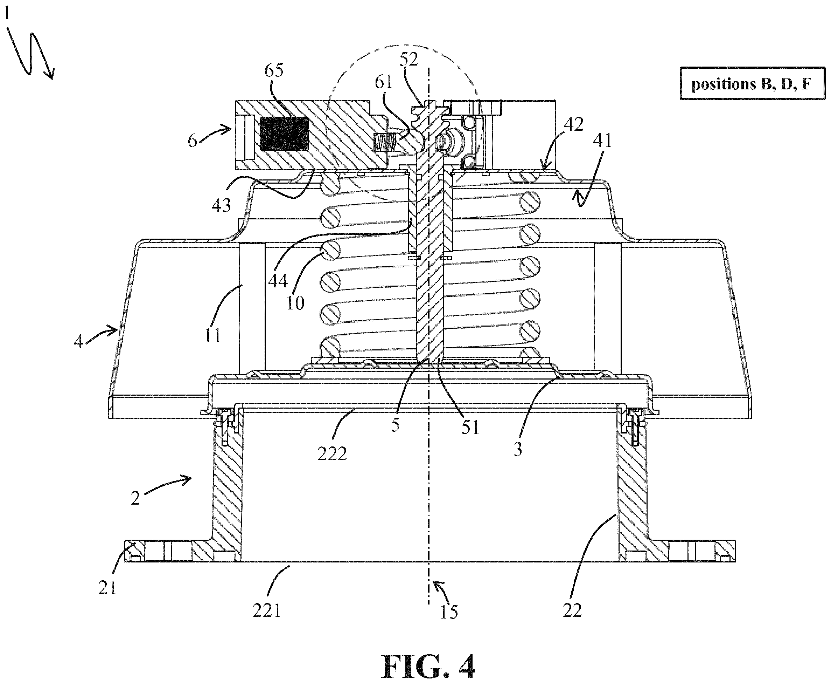

Preferably, when it is in the lowered position C, the actuation pin 5 has its first end 51 resting o very proximate to the valve element 3 (figure 4).

In this way, when the valve element 3 moves from the closed position A to the open position B due to the pressure exerted by the insulating liquid spilling from the tank 101, the actuation pin 5 is necessarily moved from the lowered position C to the raised position D.

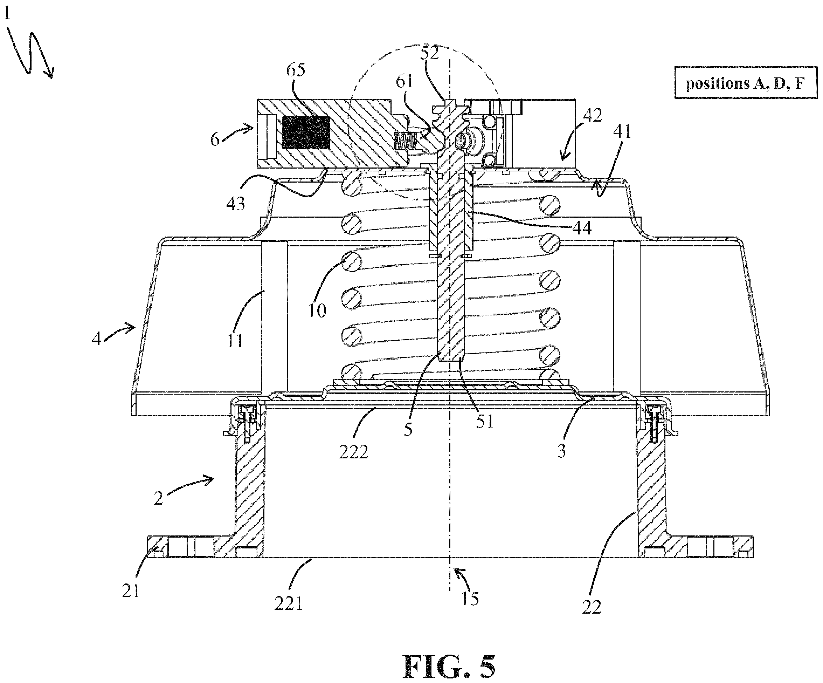

As it will be better illustrate in the following, when it reaches the raised position D, the actuation pin 5 may stably maintain such a position (figure 5). The first end 51 of the actuation pin 5 can thus separates from the valve element 3 as soon as this latter moves from the open position B to the closed position A upon the force exerted by the first elastic means 10 on the valve element 3.

The return movement of the actuation pin 5 from the raised position D to the lowered position C is conveniently obtained by exerting a return force on the actuation pin 5 along longitudinal axis 5 in a sense opposite to the raising movement. Such a return may be manually exerted by a user or a suitable actuation mechanism (not shown).

According to a preferred constructive variant, the actuation pin 5 is arranged to pass through the opening 45 of the protection cover 4 and protrude from the external surface 42 of the protection cover 4.

When it is in the lowered position C, the actuation pin 5 has its second end 52 at a first distance from the external surface 42 of the protection cover 4, whereas, when it is in the raised position D, the actuation pin 5 has its second end 52 at a second distance, which is longer than said first distance, from the external surface 42 of the protection cover 4.

Preferably, the actuation pin 5 is inserted through the bushing 44 of the protection cover 4.

Preferably, the actuation pin 5 is arranged coaxially with the valve element 3 and the protection cover 4 along the longitudinal axis 15.

Preferably, the actuation pin 5 is made of plastic material and it has a cylindrical geometry as shown in the cited figures,

According to the above-illustrated embodiments of the invention, the switch devices 6 are arranged to mechanically interact with the actuation pin 5.

In particular, the switch devices 6 have their switch pin 61 operatively coupled with the actuation pin 5, so that a movement of their switch pin 61 from the compressed position E to the released position F is responsive to a movement of the actuation pin 5 from the lowered position C to the raised position D.

In other words, the switch devices 6 have their switch pin 61 operatively coupled with the actuation pin 5, so that their switch pin 61 moves from the compressed position E to the released position F when the actuation pin 5 moves from the lowered position C to the raised position D.

In this way, a movement of their switch pin 61 from the compressed position E to the released position F is indirectly responsive to a separation movement of the valve element 3 from the closed position A to the open position B.

Preferably, when said actuation pin 5 is in the lowered position C, the switch pin 61 of each switch device 6 is operatively coupled with a first portion 53 of the actuation pin 5.

The first portion 53 of the actuation pin 5 is adapted to urge the switch pin 61 in the compressed position E. In this way, the first portion 53 stably maintains the switch pin 61 in the compressed position E and prevents its movement towards the released position F by contrasting the force exerted by the second elastic means 62.

Preferably, the first portion 53 of the actuation pin 5 is located in a proximal position with respect to the second end 52 of the actuation pin 5.

According to a possible constructive variant (figures 2-7), the first portion 53 of the actuation pin 5 comprises a grooved coupling surface 531 for coupling with the switch pin 6 of the one or more switch devices 6.

As an example, the coupling surface 531 may be a cylindrical surface portion of the actuating pin 5 provided with a circular groove around its external perimeter as shown in the cited figures. In this way, when it is coupled with first portion 53, the switch pin 61 can rest on the outer edges of such a circular groove.

This solution remarkably helps to stably maintain the switch pin 6 coupled with the actuation pin 5 in the compressed position E even when relevant undesired vibrations of the actuation pin 5 occur.

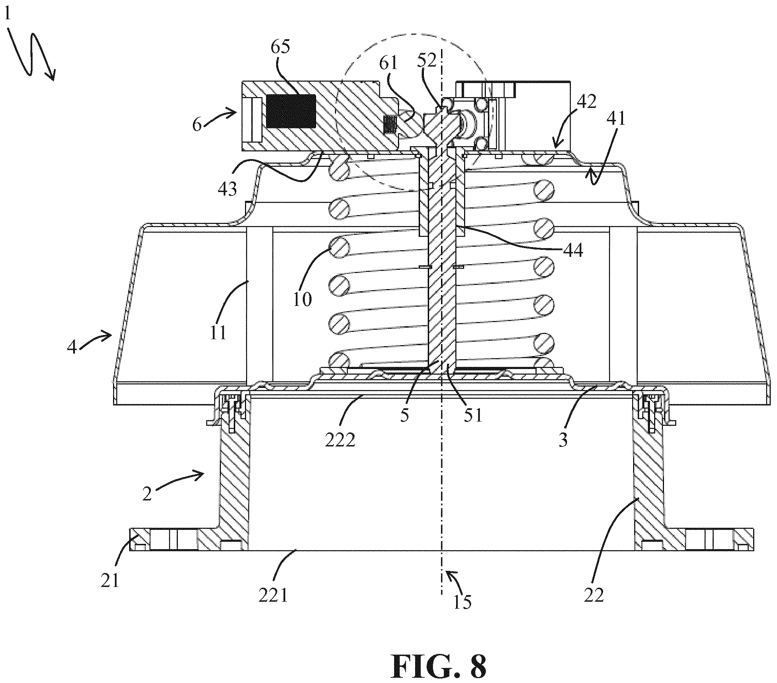

According to other constructive variants (figures 8-10), the first portion 53 of the actuation pin 5 comprises a straight coupling surface 532 for coupling with the switch pin 6 of the one or more switch devices 6.

As an example, the coupling surface 532 may be a cylindrical surface portion of the actuating pin 5.

Preferably, when said actuation pin 5 is in the raised position D, the switch pin 61 of each switch device 6 is operatively coupled with a second portion 54 of the actuation pin 5, which is adapted to allow the switch pin 61 to take the released position F.

In particular, the second portion 54 of the actuation pin 5 is adapted to allow the switch pin 61 to move towards the released position F upon the force exerted by the corresponding second elastic means 62.

Preferably, the second portion 54 of the actuation pin 5 is located in a distal position with respect to the second end 52 of the actuation pin 5 (however conveniently in proximity of the first portion 53).

Preferably, the second portion 54 of the actuation pin 5 comprises a first seat 541, in which the switch pin 61 is at least partially inserted, when it takes the released position F.

Preferably, the first seat 541 is defined by one or more walls 542 shaped in such a way to favor the insertion of the switch pin 61 in the seat 541 itself.

As an example (figures 2-10), the first seat 541 may be defined by a reversed-conical wall 542 in the proximity of the first portion 53 of the actuation pin 5.

This solution makes prompter and easier the movement of the switch pin 61 in response to a movement of the actuation pin 5 from the lowered position C to the raised position D, which remarkably improves the signalling reliability of the switch devices 6 even when relevant undesired vibrations of the actuation pin 5 occur.

It is evidenced that the insertion of the switch pin 6 in the first seat 541 of the actuation pin 5 allows stably maintaining this latter in the raised position D even if the valve element 3 returns in the closed position A.

The actuation pin 5 can thus operate a visual signalling element of the occurrence of a spillage of insulating liquid from the tank 101.

According to some embodiments of the invention, the actuation pin 5 can mechanically actuate an additional visual signalling element when it moves from the lowered position C to the raised position D.

Preferably, when the actuation pin 5 is arranged to pass through the opening 45 of the protection cover 4 and protrude from the external surface 42 of this latter, the switch devices 6 are arranged on the external surface 42 of the protection cover 4 in proximity of the opening 45. As an example (figures 2-10), multiple switch devices 6 may be radially arranged in such a way to have their switch pin 61 conveniently facing the actuation pin 5.

Preferably, when it is inserted through a bushing 44 of the protection cover 4, the actuation pin 5 comprises a third portion 55, at which an O-ring element 8, which is operatively coupleable with the bushing 44, is arranged.

The O-ring element 8 is conveniently adapted to increase friction of the actuation pin 5 with the bushing 44, which helps maintaining the actuation pin 5 in the raised position D once the valve element 3 has returned to the closed position A following a separation movement.

Additionally the O-ring element 8 prevents the leakage of external liquids (e.g. water) towards the valve element 3 and, more in general, into the internal volume defined by the protection cover 4.

Preferably, the third portion 55 of the actuation pin 51 comprises a third seat 551 (e.g. a circular groove) for accommodating the O-ring element 8.

Preferably, when it is inserted through the bushing 44 of the protection cover 4, the actuation pin 5 comprises a fourth portion 56, at which an end-of-run element 9 operatively coupleable with the bushing 44 is arranged.

The end-of run element 9 is conveniently adapted to limit the movement of said actuation pin in response to a separation movement of the valve element 3 from the closed position A to the open position B. The end-of run element 9 thus provides safety blocking functionalities for the actuation pin 5.

Preferably, the fourth portion 54 of the actuation pin 51 comprises a fourth seat 561 (e.g. a circular groove) for accommodating the end-of-run element 9, which may be conveniently formed by a circular washer of metallic material.

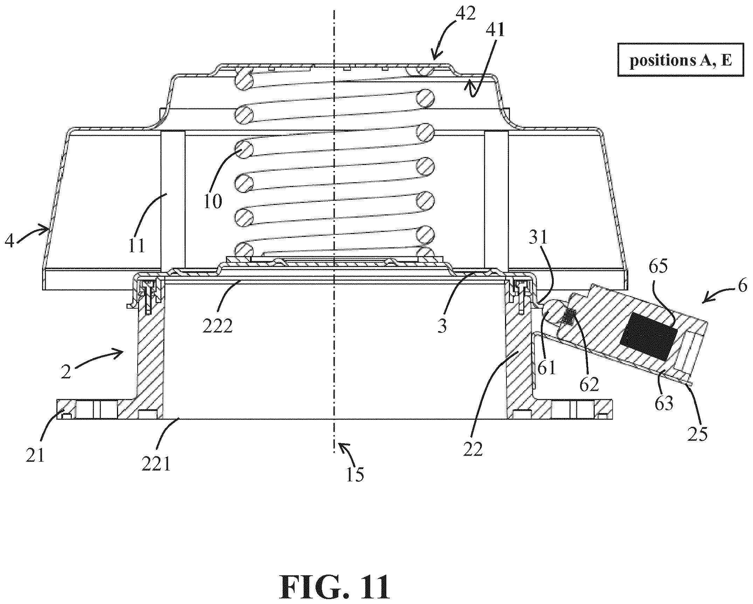

According to alternative embodiments of the invention (illustrated in figures 11-12), the valve element 3 comprises an actuation portion 31.

As an example, such an actuation portion 31 may be formed by a lateral shaped edge of the reversed-cup shaped body forming the valve element 3.

According to these embodiments of the invention, the switch devices 6 are arranged to mechanically interact with the actuation portion 31 of the valve element 3.

In particular, the switch devices 6 have their switch pin 61 operatively coupled with the actuation portion 31 in such a way that a movement of their switch pin 61 from the compressed position E to the released position F is (directly) responsive to a separation movement of the valve element 3 from the closed position A to the open position B.

In other words, the switch devices 6 have their switch pin 61 operatively coupled with the actuation portion 31 in such a way that their switch pin 61 moves from the compressed position E to the released position F when the valve element 3 moves from the closed position A to the open position B.

Preferably, when the valve element 3 is in the closed position A, the actuation portion 31 urges
the switch pin 61 of each the switch device 6 in the compressed position E.

In particular, the actuation portion 31 stably maintains the switch pin 61 in the compressed position E and prevent its movement towards the released position F upon the force exerted by the corresponding second elastic means 62.

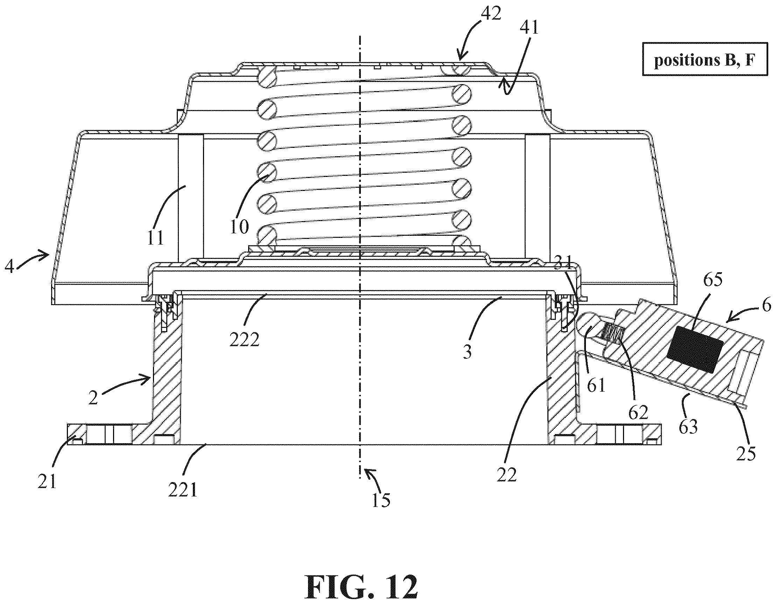

Preferably, when the valve element 3 is in the open position B, the actuation portion 31 is separated from the switch pin 61 of each switch device 6 (figure 12). The switch pin 61 of each switch device 6 is thus free to move towards the released position F upon the force exerted by the corresponding second elastic means 62.

Preferably, the switch devices 6 are arranged on a dedicated support 25 of the support flange 2.

The pressure relief device 1, according to the invention, allows achieving the intended aims and objects.

The present invention provides an activation mechanism of the switch devices 6 that provides for moving the switch pin of each switch device from a compressed position E to a released position F in response to a separation movement of valve element 3 from the closed position A to the open position B.

Such an activation mechanism shows a high level of reliability even in presence of relevant vibration phenomena involving the pressure relief device. This allows remarkably reducing false signalling events or missing signalling events of overpressure phenomena in the tank 101 of the power transformer 100.

In addition, such an activation mechanism allows reducing the actuation force necessary to actuate the switch pin 61 of each switch device 6. Moreover, the intensity of such an actuation force is made substantially independent from the number of switch devices 6 included in the pressure relief device 6. These advantages allow the switch devices 6 to signal a separation movement of the valve element 3 with a very short response time.

The above-mentioned solution provided by the present invention allows simplifying the practical arrangement of the switch devices 6. As an example, a relevant number of switch devices 6 may properly arranged to implement improved control functionalities of the power transformer or for redundancy purposes.

The pressure relief device 1 can be easily installed on the tank 101 of a transformer 100 using mechanical connection means of known type.

The pressure relief device 1 has a relatively simple structure, which can be manufactured with overall industrial costs that are very competitive costs with respect to traditional devices of the same type.

## Claims

1. A pressure relief device (1) for a power transformer (100) provided with a tank (101) filled with an insulating liquid, said pressure relief device comprising:
- a support flange (2) operatively coupleable with said tank (101) and comprising a through port (22) coupleable with an opening (104) of said tank;
- a valve element (3) displaceable between a closed position (A), at which it obstructs said through port, and an open position (B), at which it is spaced away from said support flange;
- a protection cover (4) fixed with said support flange and spaced apart from said support flange and said valve element;
- first elastic means (10) adapted to urge said valve element (3) in said closed position (A) and contrast a movement of said valve element from said closed position (A) to said open position (B);
- at least a switch device (6) adapted to signal a movement of said valve element from said closed position (A) to said open position (B);
**characterised in that** said at least a switch device (6) comprises a switch pin (61) reversibly movable between a compressed position (E) and a released position (F) and operatively coupled with an actuation component (5, 31) of said pressure relief device, a movement of said switch pin (61) from said compressed position (E) to said released position (F) being responsive to a movement of said valve element from said closed position (A) to said open position (B).

2. A pressure release device, according to claim 1, **characterised in that** it comprises an actuation pin (5) having a first end (51) operatively coupleable with said valve element and a second end (52) opposite to said first end, said actuation pin being reversibly movable between a lowered position (C) and a raised position (D), a movement of said actuation pin from said lowered position (C) to said raised position (D) being responsive to a movement of said valve element from said closed position (A) to said open position (B), said switch pin (61) being operatively coupled with said actuation pin (5), a movement of said switch pin (61) from said compressed position (E) to said released position (F) being responsive to a movement of said actuation pin from said lowered position (C) to said raised position (D).

3. A pressure release device, according to claim 2, **characterised in that**, when said actuation pin (5) is in said lowered position (C), said switch pin (61) is operatively coupled with a first portion (53) of said actuation pin, which urges said switch pin (61) in said compressed position (E).

4. A pressure release device, according to claim 3, **characterised in that** the first portion (53) of said actuation pin (5) comprises a grooved coupling surface (531) for coupling with said switch pin.

5. A pressure release device, according to claim 3, **characterised in that** the first portion (53) of said actuation pin (5) comprises a straight coupling surface (532) for coupling with said switch pin.

6. A pressure release device, according to one of the claims from 2 to 5, **characterised in that**, when said actuation pin (5) is in said raised position (D), said switch pin (61) is operatively coupled with a second portion (54) of said actuation pin, which allows said switch pin (61) to take said released position (F).

7. A pressure release device, according to claim 6, **characterised in that** the second portion (54) of said actuation pin (5) comprises a first seat (541), in which said switch pin (61) is at least partially inserted.

8. A pressure release device, according to claim 7, **characterised in that** said first seat (541) is defined by one or more walls (542) of said actuation pin (5) designed to favor the insertion of said switch pin (61) in response to a movement of said actuation pin from said lowered position (C) to said raised position (D).

9. A pressure release device, according to one of the claims from 2 to 8, **characterised in that** said actuation pin (5) passes through an opening (45) of said protection cover and protrudes from an external surface (42) of said protection cover, said at least a switch device (6) being arranged on said external surface.

10. A pressure release device, according to claim 1, **characterised in that** said valve element (3) has an actuation portion (31), said switch pin (61) being operatively coupled with said actuation portion, a movement of said switch pin from said compressed position (E) to said released position (F) being responsive to a movement of said valve element from said closed position (A) to said open position (B).

11. A pressure release device, according to claim 10, **characterised in that**, when said valve element (3) is in said closed position (A), said actuation portion (31) urges said switch pin (61) in said compressed position (E).

12. A pressure release device, according to claims 10 or 11, **characterised in that**, when said actuation pin (5) is in said raised position (D), said actuation portion (31) is separated from said switch pin (61) to allow said switch pin (61) to take said released position (F).

13. A pressure release device, according to one of the previous claims, **characterised in that** said at least a switch device (6) comprises a contact arrangement (65) operatively coupled with said switch pin (61), said contact arrangement being adapted to provide an output electric signal in response to a movement of said switch pin.

14. A power transformer (100) for electric transmission and distribution installations **characterised in that** it comprises a pressure release device, according to one of the previous claims.
